# NEW EUROPEAN PATENT SPECIFICATION

(11) **EP 3 568 520 B2**
(45) Date of publication and mention of the opposition decision: **17.04.2024**
(45) Mention of the grant of the patent: 27.01.2021
(21) Application number: 17821822.8
(22) Date of filing: 06.12.2017
(51) Int. Cl.: D21D 1/30, B02C 7/12, B29C 64/00

(54) **METHODS FOR MANUFACTURING A REFINER DISC SEGMENT**
VERFAHREN ZUR HERSTELLUNG EINES REFINERSCHEIBENSEGMENTS
PROCEDES DE FABRICATON D'UN SEGMENT DISQUE DE RAFFINEUR

(30) Priority: 12.01.2017 DE 202017100135 U
(43) Date of publication of application: 20.11.2019
(73) Proprietor: Valmet AB, 851 94 Sundsvall (SE)
(72) Inventor: HEDLUND, Christer, 641 96 Katrineholm (SE)
(74) Representative: Becker Kurig & Partner Patentanwälte mbB
(86) International application number: PCT/EP2017/081679
(87) International publication number: WO 2018/130346

(56) References cited:
- EP-A1- 2 508 670
- WO-A1-2016/169672
- WO-A1-2017/031496
- WO-A1-2017/031496
- WO-A2-2006/043162
- WO-A2-2006/043162
- CN-A- 105 750 500
- DE-C1- 10 058 748
- GB-A- 2 515 773
- GB-A- 2 515 773
- CHEAH C M ET AL: "Rapid prototyping and tooling techniques: a review of applications for rapid investment casting", THE INTERNATIONAL JOURNAL OF ADVANCED MANUFACTURING TECHNOLOGY, SPRINGER, BERLIN, DE, vol. 25, no. 3-4, 1 February 2005 (2005-02-01), pages 308-320, XP019380139, ISSN: 1433-3015, DOI: 10.1007/S00170-003-1840-6
- Gebhardt Andreas: "Understanding Additive Manufacturing. Rapid Prototyping Rapid Tooling Rapid Manufacturing", Hanser Publications, 1 January 2011 (2011-01-01), pages 1-167,
- THOMPSON et al.: "Design for Additive Manufacturing: '' Trends, opportunities, considerations, and constraints", CIRP Annals - Manufacturing Technology, vol. 65, 2016, pages 737-760, DOI: 10.1016/j.cirp.2016.05.004
- Eos: "EOS to integrate EOSPRINT Software into Siemens NX to build on Siemens' end-to-end Additive Manufacturing solution", , 11 November 2016 (2016-11-11), pages 1-2, Retrieved from the Internet: URL:https://www.eos.info/em/about-us/press -releases/eos-to-integrate-eosprint-softwa re [retrieved on 2021-11-08]
- Literature/lnternet search performed by Bayern Innovativ containing annexes 1 to 6
- PowerPoint presentation 1/12-12/12 and Twitter data protection rules
- Twitter search with the search concept "valmet 3D printing",annexes A to H
- English translation of CN 105750500 A

## Description

### TECHNICAL FIELD

The present invention relates generally to the manufacturing of a refiner disc, which is to be used in a disc-type refiner, and in particular to a method for producing a refiner disc by a process that includes the use of 3D printing.

### BACKGROUND

Lignocellulosic material, e.g., wood chips, saw dust and other fibrous material from wood or plant, is refined by mechanical refiners that separate fibers from the fiber network that forms the lignocellulosic material. A typical refiner for processing fibrous material is a disc-type refiner, wherein two refiner plates - which also are referred to as refiner discs - are positioned opposite to each and wherein at least one refiner plate rotates with respect to the other refiner plate. A rotating refiner plate or refiner disc may be referred to as a rotor, while a stationary refiner plate or refiner disc may be referred to as a stator. The rotor and stator plates comprise refiner plate segments, which can be mounted directly on the rotor and stator, respectively, or can be mounted by means of special segment holders.

The lignocellulosic material to be refined is fed into a central inlet in at least one of the two refiner plates, and moves therefrom into a refining gap arranged between the two refiner plates. As at least one of the refiner plates rotates, centrifugal forces created by the relative rotation between the two refiner plates move the lignocellulosic material outwards and towards the periphery of the refiner plates. The opposing refiner plates comprise refiner plates segments, which have surfaces that include bars and grooves; and the lignocellulosic material is - in the refining gap provided between crossing bars of the opposing refiner plate segments - separated into fibers by forces created by the crossing bars as the refiner plates rotate in relation to each other. The bars and grooves of a refiner plate segment can be arranged in more or less complex and sophisticated patterns, and such segment patterns can further comprise dams and openings, which are arranged to guide lignocellulosic material and/or steam in desired paths and routes.

Over the years, a large variety of refiner segment patterns have been developed, wherein a specific pattern can have designed to, for example, reduce the energy consumption of a refiner, reduce wear of the refiner plate segment, and/or to improve the quality of refined fibers. Specific segment patterns have also been developed to be tailored to specific, more or less local raw materials.

The manufacturing of a refiner segment comprising a novel segment pattern involves different processes and machinery, and comprises typically the following steps. First, a 3D model of the refiner segment is created with a CAD (Computer-Aided Design) package. (The 3D model is actually a mathematical representation of the three-dimensional surface of the refiner segment in question, and is typically stored in a so-called STL (STereoLithography) file.) The 3D model generated by the CAD program then serves as input to a CAM (Computer-Aided Machine) package, which generates a CNC (Computer Numerical Control) code that is used to control a NC controlled cutter or milling machine, which, starting from metal work piece, mills a model of the refiner segment; or, in practice, a front side and a back side of the refiner segment are created These refiner segment model halves are then used to produce a mold, in which the refiner segments are casted, and finally a number of (e.g. 18-20) refiner segments are finally assembled to one refiner disc.

As can be appreciated from the above, the processes of manufacturing a refiner segment are relatively complex and time-consuming, and refiner segments produced by such processes are consequently relatively expensive, which - since the refiner segments during operation of the refiner are continuously worn and have to be replaced - contribute negatively to the overall operating economy of a pulp mill. Another problem accompanying the manufacturing process described above is that the cutter or milling machine, because of its mechanical machining with relatively coarse cutting tools, sets limits for the type of refiner segment patterns that can be created. In other words, segment patterns which are considered to be more effective in producing high-quality fibers cannot always be produced.

GB 2 515 773 A discloses a method of making a conduit and/or a mould suitable for use in a casting process that uses an additive layer manufacturing process (ALM). The conduit and/or mould can be made directly using the ALM process or an ALM process can be used to make a model which is then coated, with the model then being removed. The method can be used to make a conduit or a mould with a flow influencing structure in the form of a baffle, filter, spiral, gate, protrusion, perforated plate or a taper.

CHEAH C M ET AL: "Rapid Prototyping and tooling techniques: a review of applications for rapid investment casting" discloses an application and potential applications of state-of-the-art rapid tooling (RT) technologies (RP&T) in Investment casting (IC). The techniques are introduced and related research by different organisations and academic institutions are discussed.

An object of the present invention is therefore to provide a method for producing a refiner segment with improved and/or more efficient manufacturing processes. A further object is to provide a method for producing a refiner segment or a method for producing a refiner segment model comprising structures that can only be accomplished by an improved manufacturing process, or comprising structures that more effectively can be accomplished by an improved manufacturing process.

### BRIEF DESCRIPTION OF THE INVENTION

The above-mentioned object is achieved with a method for producing a refiner segment according to the independent claim. Preferred embodiments are set forth in the dependent claims. The description below refers to a disc-type refiner segment produced by a method. However, it should be understood that the present disclosure also discloses the corresponding methods of producing the disc-type refiner segments.

In a first embodiment of the present disclosure, a method is provided, comprising providing production data of the disc-type refiner segment; supplying the production data to a 3D printer; 3D printing a pattern of the disc-type refiner segment; using the pattern of the disc-type refiner segment to generate a mold of the of the disc-type refiner segment; and molding or casting the disc-type refiner segment using the mold.

Generally, in the present disclosure, the production data may be provided in any suitable data type. Usually, 3D printable models may be created with a computer-aided design (CAD) package, via a 3D scanner, or by a plain digital camera and photogrammetry software. 3D printed models created with CAD result in reduced errors and can be corrected before printing, allowing verification in the design of the object before it is printed. Accordingly, CAD data are preferred in the present disclosure.

Generally, in the present disclosure, the printing step may be performed by any suitable 3D printer type. Preferred printing materials are selected from metals or metal alloys, plastics, polymers, wax, and plaster. The present invention should not be limited to a specific printing material.

Generally, in the present disclosure, the step of generating a mold may be performed as commonly known in the art. For example, the refiner segment pattern may be embedded in casting sand or similar materials capable of gathering and keeping the structure of the surface of the pattern. For example, the created mold may comprise two or more separate mold parts to allow removal of the refiner segment pattern. The step of casting or molding is performed by any suitable casting method. Preferred casting or molding materials are metals and metal alloys or mineral glasses with high hardness to minimize wear of the resulting refiner disc.

In one modification of the first embodiment of the present disclosure, the disc-type refiner segment comprises at least a first part and a second part and wherein the patterns of the first and second parts of the disc-type refiner segment are formed separately. After the casting or molding step and probably after a final finishing step, the at least two parts are combined to form the final disc-type refiner segment. Preferable combination methods comprise gluing, welding and fitting using suitable fitting structures of said disc-type refiner segment parts.

In one modification of the first embodiment of the present disclosure, the step of providing production data of the disc-type refiner segment comprises providing production data of the first and second parts of the disc-type refiner segment.

In one modification of the first embodiment of the present disclosure, the step of supplying the production data to a 3D printer comprises supplying the production data of the first and second parts of the disc-type refiner segment to the 3D printer.

In one modification of the first embodiment of the present disclosure, the step of 3D printing a pattern of the disc-type refiner segment comprises 3D printing a pattern of the first and second parts of the disc-type refiner segment.

In one modification of the first embodiment of the present disclosure, the step of using the pattern of the disc-type refiner segment to generate a mold of the of the disc-type refiner segment comprises using the pattern of the first and second parts of the disc-type refiner segment to generate a first mold and a second mold of the first and second parts of the disc-type refiner segment.

In one modification of the first embodiment of the present disclosure, the step of molding or casting the disc-type refiner segment using the mold comprises molding or casting the first and second parts of the disc-type refiner segment using the first and second molds.

In one modification of the first embodiment of the present disclosure, the molding or casting step comprises sand casting, plaster mold casting, shell molding, investment casting, lost-wax casting, evaporative-pattern casting, lost-foam casting, full-mold casting, die casting, permanent mold casting, and semi-solid metal casting.

The basic idea in the present disclosure is using a 3D printing method for producing the disc-type refiner segment. This is achieved by producing a pattern of the disc-type refiner segment using the 3D printer from which pattern a negative mold is formed in which mold the final disc-type refiner segments are then casted in an additional production step.

Benefits of the present invention lie in the variety of shapes and arrangements of surface structures that may be implemented in the inventive disc-type refiner segments. The conventional production of segments, molds, and segment patterns through cutting tools is expensive and limited by the travel paths the cutting tool must take to form cavities and passages in the disc-type refiner segment. 3D printers do not have such limitations such that new structures may be implemented and tested with moderate expenses.

### DETAILLED DESCRIPTION OF PREFERRED EMBODIMENTS

The present invention is based on the use of a 3D printer to produce a model of a refiner segment. In one embodiment a refiner segment model is used to produce a mold, in which a refiner segment is molded or casted. More specifically, according to the disclosure, a refiner segment can be produced following manufacturing steps.

In one specific embodiment of the present disclosure, a 3D model of a first side, e.g. a front side, of a refiner segment is produced with a CAD program package, where the 3D refiner segment model created by the CAD program is a mathematical representation stored in a first data file with a suitable file format, e.g. a STL file. Then, a 3D model of a second side, e.g. a back side, of the refiner segment is produced with a CAD program package, where the 3D refiner segment model created by the CAD program is a mathematical representation stored in a second data file with a suitable file format, e.g. a STL file. Suitable CAD program packages are, for example, Pro/Engineer and SolidWorks. Optionally but preferably, the data on the first and second data files are checked for errors and imperfections with a suitable software program package, e.g. a program package provided by the company EOS e-manufacturing solutions. Besides correcting errors in the data files, it is important that all geometrical structures in the refiner segment models are reproducible in subsequent manufacturing steps and are suitable for such manufacturing steps, as will be further discussed below. Depending on the geometrical structures incorporated in the refiner segments and on the specific 3D printer and 3D printer software chosen, the data contained in the data files is mathematically sliced into layers, which can have a virtual thickness of, e.g., 0.01 mm. The mathematically sliced data files are then input into a suitable 3D printer package and a first side, e.g. a front side, of a refiner segment is printed using a 3D printer. Different 3D printing techniques can be employed, but a preferred technique is so-called direct metal laser sintering (DMLS), which utilizes an ytterbium (Yb) fiber laser fired into a bed of metal powder. Similarly, a second side, e.g. a back side, of the refiner segment by a 3D printing technique. The first and second sides of the refiner segment model are then used to create two mold halves which are put together to form a mold. The mold is typically made in sand, as is well-known in the art. In conventional manner, a refiner segment is then molded or casted in the mold. In practice, since several, e.g. 18-20, segments are needed for each refiner disc, and a pulp mill consumes several refiner discs pro year, many, e.g. several hundreds, of sand molds are produced from the two 3D printed sides of a refiner segment model.

From the above, it should be appreciated that the 3D refiner segment model as represented on the data file(s), should be suitable not only for 3D printing but also for forming molds and casting of refiner segments in these molds. Thus, the 3D refiner segment model should not only be free from errors, all geometrical shapes, e.g. corners, edges and angles, must be reproducible when producing the (sand) molds and subsequently when casting the final refiner segments in the molds. Thus, the 3D models must typically be carefully checked before they can be used in 3D printer, to produce a three-dimensional refiner segment model which in an effective manner can be used to produce a mold for casting of a refiner segment.

In one aspect of the disclosure, a refiner segment model, which comprises a front side and a back side, is provided by the use of a 3D printer.

## Claims

1. Method for producing a disc-type refiner segment for refining lignocellulosic material, comprising:
providing production data of the disc-type refiner segment;
supplying the production data to a 3D printer;
3D printing a pattern of the disc-type refiner segment;
using the pattern of the disc-type refiner segment to generate a mold of the disc-type refiner segment; and
molding or casting the disc-type refiner segment using the mold.

2. Method according to claim 1, wherein the disc-type refiner segment comprises at least a first part and a second part and wherein the patterns of the first and second parts of the disc-type refiner segment are formed separately.

3. Method according to claim 2, wherein the step of providing production data of the disc-type refiner segment comprises providing production data of the first and second parts of the disc-type refiner segment.

4. Method according to one of claims 2-3, wherein the step of supplying the production data to a 3D printer comprises supplying the production data of the first and second parts of the disc-type refiner segment to the 3D printer.

5. Method according to one of claims 2-4, wherein the step of 3D printing a pattern of the disc-type refiner segment comprises 3D printing a pattern of the first and second parts of the disc-type refiner segment.

6. Method according to one of claims 2-5, wherein the step of using the pattern of the disc-type refiner segment to generate a mold of the of the disc-type refiner segment comprises using the pattern of the first and second parts of the disc-type refiner segment to generate a first mold and a second mold of the first and second parts of the disc-type refiner segment.

7. Method according to one of claims 2-6, wherein the step of molding or casting the disc-type refiner segment using the mold comprises molding or casting the first and second parts of the disc-type refiner segment using the first and second molds.

## Patentansprüche

1. Verfahren zur Herstellung eines Refiner-Segments vom Scheiben-Typ zum Verfeinern von Lignocellulosematerial, umfassend:
Bereitstellen von Produktionsdaten des Refiner-Segments vom Scheiben-Typ;
Zuführen der Produktionsdaten an einen 3D-Drucker;
3D-Drucken eines Musters des Refiner-Segments vom Scheiben-Typ;
Verwenden des Musters des Refiner-Segments vom Scheiben-Typ, um eine Form des Refiner-Segments vom Scheiben-Typ zu erzeugen; und
Formen oder Gießen des Refiner-Segments vom Scheiben-Typ unter Verwendung der Form.

2. Verfahren gemäß Anspruch 1, wobei das Refiner-Segment vom Scheiben-Typ mindestens einen ersten Teil und einen zweiten Teil umfasst und wobei die Muster des ersten und zweiten Teils des Refiner-Segments vom Scheiben-Typ getrennt voneinander gebildet werden.

3. Verfahren gemäß Anspruch 2, wobei der Schritt des Bereitstellens von Produktionsdaten des Refiner-Segments vom Scheiben-Typ das Bereitstellen von Produktionsdaten des ersten und zweiten Teils des Refiner-Segments vom Scheiben-Typ umfasst.

4. Verfahren gemäß irgendeinem der Ansprüche 2-3, wobei der Schritt des Zuführens der Produktionsdaten an einen 3D-Drucker das Zuführen der Produktionsdaten des ersten und zweiten Teils des Refiner-Segments vom Scheiben-Typ an den 3D-Drucker umfasst.

5. Verfahren gemäß irgendeinem der Ansprüche 2-4, wobei der Schritt des 3D-Druckens eines Musters des Refiner-Segments vom Scheiben-Typ das 3D-Drucken eines Musters des ersten und zweiten Teils des Refiner-Segments vom Scheiben-Typ umfasst.

6. Verfahren gemäß irgendeinem der Ansprüche 2-5, wobei der Schritt des Verwendens des Musters des Refiner-Segments vom Scheiben-Typ zum Erzeugen einer Form des Refiner-Segments vom Scheiben-Typ das Verwenden des Musters des ersten und zweiten Teils des Refiner-Segments vom Scheiben-Typ zum Erzeugen einer ersten Form und einer zweiten Form des ersten und zweiten Teils des Refiner-Segments vom Scheiben-Typ umfasst.

7. Verfahren gemäß irgendeinem der Ansprüche 2-6, wobei der Schritt des Formens oder Gießens des Refiner-Segments vom Scheiben-Typ unter Verwendung der Form das Formen oder Gießen des ersten und zweiten Teils des Refiner-Segments vom Scheiben-Typ unter Verwendung der ersten und zweiten Form umfasst.

## Revendications

1. Procédé de fabrication d'un segment de raffineur de type disque pour le raffinage de matériau lignocellulosique, comprenant :
la fourniture de données de production du segment de raffineur de type disque ;
la fourniture des données de production.à une imprimante 3D ;
l'impression 3D d'un modèle du segment de raffineur de type disque ;
l'utilisation du modèle de segment de raffineur de type disque pour générer un moule du segment de raffineur de type disque ; et
le moulage ou le coulage du segment de raffineur de type disque en utilisant le moule.

2. Procédé selon la revendication 1, dans lequel le segment de raffineur de type disque comprend au moins une première pièce et une seconde pièce et les modèles des première et seconde pièces du segment de raffineur de type disque sont formés séparément.

3. Procédé selon la revendication 2, dans lequel l'étape de fourniture de données de production du segment de raffineur de type disque comprend la fourniture de données de production des première et seconde pièces du segment de raffineur de type disque.

4. Procédé selon l'une quelconque des revendications 2 à 3, dans lequel l'étape de fourniture des données de production à une imprimante 3D comprend la fourniture des données de production des première et seconde pièces du segment de raffineur de type disque à l'imprimante 3D.

5. Procédé selon l'une quelconque des revendications 2 à 4, dans lequel l'étape d'impression 3D d'un modèle du segment de raffineur de type disque comprend l'impression 3D d'un modèle des première et seconde pièces du segment de raffineur de type disque.

6. Procédé selon l'une quelconque des revendications 2 à 5, dans lequel l'étape d'utilisation, du modèle de segment de raffineur de type disque pour générer un moule du segment de raffineur de type disque comprend l'utilisation du modèle des première et seconde pièces du segment de raffineur de type disque pour générer un premier moule et un second.moule des première et seconde pièces du segment de raffineur de type disque.

7. Procédé selon l'une quelconque des revendications 2 à 6, dans lequel l'étape de moulage ou de coulage du segment de raffineur de type disque en utilisant le moule comprend le moulage ou le coulage des première et seconde pièces du segment de raffineur de type disque utilisant les premier et second moules.
